# EUROPÄISCHE PATENTANMELDUNG

(11) **EP 4 741 094 A1**
(43) Veröffentlichungstag der Anmeldung: **13.05.2026**
(21) Anmeldenummer: 25213375.6
(22) Anmeldetag: 04.11.2025
(51) Int. Cl.: B23K 20/12

(54) **RÜHRREIBSCHWEISSWERKZEUG**

(30) Priorität: 07.11.2024 LU 508844
(71) Anmelder: Hufschmied Zerspanungssysteme GmbH, 86399 Bobingen (DE)
(72) Erfinder: OYANEDEL FUENTES, Javier A., 86863 Langenneufnach (DE)
(74) Vertreter: Gruner, Leopold Joachim

(57) **Zusammenfassung**

Die vorliegende Erfindung betrifft das Gebiet der Rührreibscheißtechnik, insbesondere monolithische Rührreibschweißwerkzeuge zum Rührreibschweißen von Werkstoffen, insbesondere Aluminium, Stahl oder Kupfer, mit integrierten Kühlkanälen. Weiterhin betrifft die Erfindung ein Rührreibschweißwerkzeughaltersystem, ein Rührreibschweißsystem und eine Methode zur Herstellung

## Beschreibung

### TECHNISCHES GEBIET

Die vorliegende Erfindung bezieht sich auf ein Rührreibschweißwerkzeug, das speziell für die Bearbeitung hochschmelzender Metalle unter hohen mechanischen und thermischen Belastungen entwickelt wurde. Bevorzugt bezieht sich die Erfindung auf ein monolithisches FSW-Werkzeug aus Hartmetall, Cermet oder Keramik, insbesondere mit integrierter Kühlmittelzufuhr zur Optimierung der Schweißprozesseffizienz. Diese Offenbarung umfasst ein FSW-Werkzeug mit inneren Kühlkanälen, die zur Ableitung der beim Schweißprozess entstehenden Wärme dienen und die Standzeit des Werkzeugs signifikant erhöhen. Darüber hinaus beinhaltet die Erfindung ein spezielles Herstellungsverfahren, das die Fertigung des Werkzeugs und der Kühlkanäle umfasst, um die Prozesswärme gezielt zu steuern und gleichzeitig die mechanische Stabilität des Werkzeugs zu gewährleisten. Dieses Werkzeug ist somit zentral für die effiziente, produktive und langlebige Durchführung von FSW-Prozessen in verschiedenen Industrien, insbesondere in der Luft- und Raumfahrt sowie der Automobilindustrie.

### STAND DER TECHNIK

Rührreibschweißen (Friction Stir Welding - FSW) hat sich als effiziente Schweißmethode für schwer schweißbare Materialien etabliert, insbesondere für Aluminiumlegierungen und hochschmelzende Metalle. Der Prozess wurde 1991 vom Welding Institute (TWI) in Großbritannien entwickelt und löste zahlreiche Probleme traditioneller Schweißmethoden wie Schweißporosität, Risse und Verzug. Während FSW ursprünglich vor allem für Aluminiumlegierungen verwendet wurde, wird es zunehmend auch für anspruchsvollere Materialien wie Kupferlegierungen und Stahl eingesetzt.

Ein zentrales Problem bei FSW von hochschmelzenden Metallen ist die übermäßige Erwärmung und der schnelle Verschleiß des Schweißwerkzeugs, insbesondere an der Schulter des Werkzeugs. Verschiedene Patente und Forschungsarbeiten haben sich mit der Kühlung des Werkzeugs während des Schweißprozesses befasst, um dessen Lebensdauer zu verlängern. Viele dieser Ansätze, wie etwa in der Patentschrift CN105234554A beschrieben, beinhalten die Verwendung von Kühlkanälen innerhalb des Werkzeugs, durch die Kühlflüssigkeit zirkuliert wird. Allerdings werden in diesen Dokumenten keine spezifischen Materialien für das Werkzeug selbst definiert, was die Anwendbarkeit dieser Lösungen auf anspruchsvolle Schweißprozesse einschränkt.

Die meisten technischen Lösungen, die bekannt sind, zielen dabei auf eine externe Kühlung der Werkstücke ab.

Die US-Patentschrift US6516992B1 beschreibt ein Verfahren zur gleichzeitigen Kühlung während des Friction Stir Welding (FSW)-Prozesses, bei dem Kühlflüssigkeit durch das Werkzeug geleitet wird, um die Oberflächenrauheit zu verringern und höhere Schweißgeschwindigkeiten zu ermöglichen. Allerdings definiert das Patent keine spezifischen Materialien für das Schweißwerkzeug, was die Anwendbarkeit auf anspruchsvollere Schweißprozesse, insbesondere bei hochschmelzenden Metallen, einschränkt. Zudem konzentriert sich das Verfahren hauptsächlich auf die Kühlung durch externe Kühlflüssigkeit, ohne eine umfassende innere Kühlung des Werkzeugs zu realisieren.

Die US-Patentschrift US7845544B2 beschreibt ein FSW-Verfahren, bei dem Kühlmittel von außen auf die Werkzeugoberfläche gesprüht wird. Diese Methode kühlt zwar die Werkzeugoberfläche, adressiert jedoch nicht die innere Wärmeentwicklung des Werkzeugs, wodurch die Kühlung ineffizient bleibt, insbesondere bei intensiven Schweißprozessen. Auch hier fehlen Angaben zu spezifischen Werkzeugmaterialien, was die Anwendung auf hochschmelzende Metalle einschränkt.

Die US-Patentschrift US6772935B2 beschreibt ein Verfahren, bei dem die Schweißnaht hinter dem Schweißwerkzeug gekühlt wird, um die Temperatur der betroffenen Zone zu senken. Diese Methode fokussiert sich auf die Schweißstelle und nicht auf die Kühlung des Werkzeugs selbst, was dazu führt, dass das Werkzeug weiterhin thermischen Belastungen ausgesetzt ist. Die Werkzeugmaterialien werden nicht spezifiziert, und es gibt keine integrierte Kühlung im Werkzeug, was die Standzeit des Werkzeugs beeinträchtigt.

Die Patentanmeldung WO2023119329A1 beschreibt ein FSW-Werkzeug mit einer Zwangskühlmethode, bei der entweder Luftgebläse, Wassersprinkler oder eine Kombination aus beidem zur Kühlung des Werkstücks verwendet werden. Der Lüfter oder das Sprinklersystem wird am Werkzeugschaft befestigt, um während des Schweißprozesses die Temperatur zu regulieren und so die mechanischen und metallurgischen Eigenschaften des Schweißguts zu verbessern. Diese Methode fokussiert sich auf die gezielte Kühlung des Werkstücks, nicht des Werkzeugs, und erfordert externe Kühlungselemente.

Die Nachteile externer Kühlung beim FSW-Prozess bestehen darin, dass nur die Werkstückoberfläche gekühlt wird, was zu unerwünschten thermischen Gradienten führt. Diese Gradienten können insbesondere bei Materialien wie Keramik oder Hartmetall zu einer erheblichen Überhitzung im Werkstückkern führen. Die ungleichmäßige Kühlung beeinträchtigt die Prozessstabilität, da der innere Teil des Werkstücks nicht ausreichend gekühlt wird. Dadurch kann es zu Verzug, Rissen oder einer verringerten Schweißqualität kommen, was den Gesamtprozess ineffizient macht.

In der Literatur finden sich nur einige wenige Ansätze, die versuchen eine direktere Kühlung zu erzielen. Die chinesische Patentschrift CN105234554A beschreibt eine Rührreibschweißkopfstruktur mit integrierter Innenkühlung, bei der Kühlkanäle spiralförmig oder in U-Form im Inneren des Werkzeugs verlaufen. Dabei wird lediglich die Verwendung von zirkulierender Kühlflüssigkeit vorgeschlagen, um die Überhitzung des Werkzeugs zu verhindern. Allerdings werden keine spezifischen Materialien für den Schweißkopf definiert, was die Anwendbarkeit auf anspruchsvollere Schweißprozesse einschränkt.

In der Patentanmeldung WO2022122447A1 wird ein rückseitig angebrachter Kühlkanal beschrieben, der das Werkzeug indirekt kühlt, indem er um die Rückseite und Teile der Seiten verläuft. Der Kühlkanal transportiert Kühlmittel, kühlt jedoch nicht direkt den Werkzeugkopf, der aus Materialien wie polykrystallinem kubischem Bornitrid (PCBN) oder Wolfram-Rhenium (W-Re) besteht. Dabei besteht nur ein Teil des Werkzeugkopfes aus Hartmaterial. Dadurch erfolgt die Kühlung nur über die Halterung, was zu weniger effizienter Wärmeabfuhr im kritischen Bereich des Werkzeugkopfes führt.

Diese Einschränkungen limitieren alle bisherigen Lösungen für Rührreibschweißwerkzeug mit einer effizienten Kühlung und langen Standzeiten für anspruchsvolle Materialien.

### AUFGABE

Die vorliegende Aufgabe besteht darin, eine effektive Kühlung von Rührreibschweißwerkzeugen aus Werkstoffen wie Cermet, Hartmetall oder Keramik sicherzustellen, die aufgrund ihres niedrigen Wärmeleitkoeffizienten besonderen Anforderungen unterliegen. Insbesondere stellt die gezielte Kühlung von Schulter und Spindel des Werkzeugs eine Herausforderung dar, da diese Bereiche während des Rührreibschweißprozesses einer hohen thermischen Belastung ausgesetzt sind. Dabei soll die Kühlung so erfolgen, dass der eigentliche Rührreibbereich nicht beeinträchtigt wird, um eine optimale Schweißqualität zu gewährleisten.

### LÖSUNG

Die Aufgabe wird durch ein Rührreibwerkzeug mit den Merkmalen des Anspruchs 1 gelöst.

Weiterhin wird die Aufgabe durch die Methode zur Herstellung eines Rührreibwerkzeuges im Sinne der vorliegenden Erfindung, ein Rührreibschweißwerkzeughaltersystem, sowie ein Rührreibscheißsystem gelöst.

Weitere vorteilhafte Ausgestaltungen und Weiterbildungen ergeben sich aus den Unteransprüchen sowie aus der Beschreibung und Ausführungsbeispielen unter Bezugnahme auf die Figuren.

### AUSFÜHRLICHE BESCHREIBUNG

Die vorliegende Erfindung betrifft ein monolithisches Rührreibschweißwerkzeug, bevorzugt für das Rührreibschweißen von Werkstoffen, insbesondere Aluminium, Stahl oder Kupfer, bestehend aus einem Formkörper (1.0), wobei der Formkörper (1.0) aufweist:
- eine Rotationsachse (2.0),
- eine Schulter (1.1), die orthogonal zu der Rotationsachse (2.0) angeordnet ist,
- eine Schultermantelfläche (1.2), welche zwischen Schulter (1.1) und Werkzeugschaft (1.4) angeordnet ist,
- einen Rührstift (1.3), der terminal auf der Rotationsachse (2.0) an der Schulter (1.1) angeordnet ist,
- einen Werkzeugschaft (1.4) mit zentral verlaufender Rotationsachse (2.0),
wobei der Formkörper (1.1) einteilig ausgestaltet ist und aus einem Material besteht das ausgewählt ist aus der Liste bestehend aus Cermet, Hartmetall, oder Keramik, wobei der Formkörper einen integrierten Kühlkanal (3.0), bevorzugt 1 bis 5 Kühlkanäle (3.0), besonders bevorzugt dazu eingerichtet ein Kühlmittel durch den Formkörper zu transportieren, aufweist, wobei der Kühlkanal mit einer Austrittsöffnung (4.0) verbunden ist, wobei die Austrittsöffnung an der Peripherie des Formkörpers angeordnet ist, bevorzugt im zur Schulter gerichteten Drittel des Werkzeugschaftes und/oder an der Schultermantelfläche (1.2). Dies erlaubt vorteilhaft, dass haltbarere Rührreibschweißwerkzeug hergestellt werden können, die durch die integrierte Kühlung neben den verbesserten mechanischen Eigenschaften auch ein bessere Wärmeabfuhr erlauben, welche insbesondere für die verwendeten Materialien Cermet, Hartmetall, oder Keramik mit geringen Wärmeleitkoeffizienten die Lebensdauer bedeutend steigern können.

Ein "Rührreibschweißwerkzeug", auch als FSW (Friction Stir Welding)-Werkzeug bekannt, oder im Sinne der vorliegenden Erfindung einfach als "Werkzeug" bezeichnet, ist ein rotierendes Verarbeitungswerkzeug, das speziell für das Fügen von Werkstoffen mit hoher Festigkeit, Sprödigkeit oder schwieriger Schweißbarkeit, wie insbesondere Aluminium, Stahl oder Kupfer, entwickelt wurde. Das Werkzeug erzeugt durch Reibung und plastische Verformung eine Schweißverbindung, ohne dass die Werkstoffe in den Schmelzzustand überführt werden müssen. Dadurch eignet sich das Rührreibschweißwerkzeug ideal für Materialien, die in konventionellen Schweißverfahren nur schwer oder unzuverlässig bearbeitet werden können.

Eine "Rotationsachse" im Sinne der vorliegenden Erfindung bezeichnet die Achse, um die das Rührreibschweißwerkzeug rotiert. Über diese Achse wird die Rotationsbewegung und Kraftübertragung von der Werkzeugspindel auf das Rührreibschweißwerkzeug realisiert. Die Rotationsachse ist zentral im Formkörper integriert, um eine gleichmäßige Verteilung der Kräfte und eine präzise Führung des Werkzeugs während des Schweißprozesses zu gewährleisten. Durch die zentrale Anordnung wird zudem eine optimale Symmetrie und Balance des Werkzeugs erreicht, was unerwünschte Schwingungen und Verschleiß reduziert.

In einigen bevorzugten Ausgestaltungsformen ist ein Formkörper, insbesondere Schulter, Schultermantelfläche und/oder Werkzeugschaft axial symmetrisch um die Rotationsachse angeordnet. Diese symmetrische Anordnung gewährleistet eine gleichmäßige Verteilung der Kräfte während des Schweißprozesses, reduziert mechanische Spannungen und sorgt für eine verbesserte Stabilität und Laufruhe des Werkzeugs.

Ein "Formkörper" im Sinne der vorliegenden Erfindung beschreibt die physische Einheit des Rührreibschweißwerkzeugs, wie sie in den nachfolgend aufgeführten Ausgestaltungsformen definiert ist. Der Formkörper ist einteilig ausgestaltet, wodurch eine erhöhte strukturelle Stabilität erreicht wird. Diese einteilige Konstruktion verhindert Fügeprobleme, die bei der Kombination unterschiedlicher Materialien auftreten könnten, und stellt sicher, dass das Werkzeug den hohen mechanischen und thermischen Belastungen während des Rührreibschweißens standhält. **In** bevorzugten Ausgestaltungen besteht der Formkörper aus einem Material, das aus der Liste umfassend oder bestehend aus Cermet, Hartmetall oder Keramik ausgewählt ist, wodurch eine hohe Verschleißfestigkeit sowie eine thermische Beständigkeit gewährleistet wird. Zudem ist der Formkörper mit zumindest einem, bevorzugt zwei, bevorzugter drei, besonders bevorzugt vier, am bevorzugtesten fünf, alternativ bevorzugt zwischen einem und 20 integrierten Kühlkanälen versehen, der eine gezielte Kühlung während des Rührreibschweißvorgangs ermöglicht. In weiteren bevorzugten Ausführungsformen weist der Formkörper zwischen einem und zwanzig Kühlkanälen, bevorzugter zwischen einem und sechzehn Kühlkanälen auf.

Unter einer "Schulter" wird im Sinne der vorliegenden Erfindung die Fläche verstanden, die direkt am Werkstoff anliegt und den Fügebereich unter anderem von Umgebungsluft abschirmt. Diese Schulter, auch als Werkzeugschulter bezeichnet, befindet sich am terminalen Ende des Formkörpers, der auf den zu bearbeitenden Werkstoff gerichtet ist. Der Bereich, der unter der Schulter in Kontakt mit dem Werkstoff steht, wird als Schulterfläche bezeichnet. Die Schulter kann relativ zur Fügeebene eine planare, konvexe oder konkave Form aufweisen und optional zusätzlich eine strukturierte Oberfläche besitzen. In einigen bevorzugten Ausführungsformen kann die Strukturierung aus konzentrischen Kreisen, offenen oder geschlossenen Spiralarmen oder unregelmäßigen Mustern bestehen. Der technische Vorteil dieser Strukturierungen liegt in einer verbesserten Materialdurchmischung und einer gleichmäßigen Wärmeverteilung im Fügebereich, was zu einer höheren Festigkeit der Fügeverbindung führt.

Unter einem "Rührstift" im Sinne der vorliegenden Erfindung, auch als Pin oder Probe bezeichnet, versteht man den terminalen Abschluss des Formkörpers des Werkzeugs, angeordnet an der Schulter, bevorzugt entlang bzw. parallel zu der Rotationsachse, der im Fügebereich des zu schweißenden Werkstoffs durch seine Relativbewegung eine Vermischung der Fügepartner bewirkt und somit die Fügung herbeiführt. Der Rührstift ist durch seine Länge gekennzeichnet, die von der Schulter entlang der Rotationsachse verläuft und vorzugsweise zwischen 0,1 und 10 cm, bevorzugt zwischen 0,2 und 3 cm, liegt. Der Rührstift weist eine geometrische Form auf, die vorzugsweise zylinderförmig, kegelzylinderförmig, quaderförmig oder prismatisch ist und optional mit einem Gewinde und/oder Schneidkanten versehen sein kann. In einigen bevorzugten Ausführungsformen kann der Rührstift über seine Grundfläche beschrieben werden, welche kreisförmig, oval, paddelförmig, dreieckig oder quadratisch sein kann. Die Wahl der jeweiligen geometrischen Form des Rührstifts hängt vom zu bearbeitenden Material ab und ist dem Fachmann bekannt.

In einigen bevorzugten Ausführungen können zwei oder mehrere Rührstifte parallel versetzt zur Rotationsachse angeordnet sein. Durch diese Anordnung kommt es zu einer stärkeren Vermischung des Fügebereiches was in einigen Anwendungen vorteilhaft sein kann.

In einigen bevorzugten Ausführungsformen weist der Rührstift ein Gewinde bzw. eine Windung auf. Diese kann für ein besseres Initiales eindringen in den Werkstoff und ein besseres Fügeverhalten führen, führt aber auch zu einer höheren Abrasion und verschließ. Eine Ausführung aus Hartmetall, Cermet oder Keramik, insbesondere Beschichten Hartmetallen, kann in diesen Ausführungsformen die Lebensdauer des Rührstiftes zusätzlich verlängern.

Eine "Schultermantelfläche" im Sinne der vorliegenden Erfindung bezeichnet die Übergangsfläche, insbesondere die äußere Oberfläche des Formkörpers, die zwischen dem Rand der Schulter, vorzugsweise der Schulterfläche, und dem Werkzeugschaft angeordnet ist. Diese Fläche kann in verschiedenen Ausführungsformen flach, konvex oder konkav ausgestaltet sein.

Ein "Werkzeugschaft" im Sinne der vorliegenden Erfindung bezeichnet den Teil des Formkörpers, der vorzugsweise das Hauptmaterial (Bulk) des Werkzeugs bildet und für die Stabilität sowie die Integration in einen Antrieb, wie z. B. eine Werkzeugspindel, verantwortlich ist. Der Werkzeugschaft kennzeichnet dabei bevorzugt den Bereich des Formkörpers mit dem größten Durchmesser. Dieser Bereich ist vorzugsweise zylindrisch ausgestaltet, kann jedoch auch Ausnehmungen, Verjüngungen oder andere geometrische Formen aufweisen, um eine flexible Integration in verschiedene Werkzeugspindeln zu ermöglichen.

In einigen bevorzugten Ausführungsformen ist der Werkzeugschaft direkt mit einer Werkzeugspindel wirkverbunden. In anderen bevorzugten Ausführungsformen kann es vorteilhaft sein, wenn der Werkzeugschaft Haltemittel aufweist, die bevorzugt aus der Gruppe bestehend aus Gewinde, Weldon-Aufnahme, Flächenspannfutter, Nut, Kerbe, Ausnehmung oder Schiene ausgewählt sind. Diese Haltemittel gewährleisten eine sichere Befestigung und erleichtern den Austausch des Werkzeugs, wodurch die Flexibilität und Effizienz des Fertigungsprozesses gesteigert wird.

Ein "integrierter Kühlkanal" im Sinne der vorliegenden Erfindung bezeichnet Ausnehmungen im Formkörper des Rührreibschweißwerkzeugs, die speziell dafür eingerichtet sind, ein Kühlmittel durch den Formkörper zu leiten, um überschüssige Wärme effizient abzuleiten. Diese Kanäle sind so positioniert, dass sie entweder direkt zur Peripherie des Formkörpers führen und dort in eine oder mehrere Austrittsöffnungen münden oder durch mindestens einen Austrittskanal mit den Austrittsöffnungen verbunden sind.

Die Geometrie der Kühlkanäle ist so gestaltet, dass ein verwirbelungsarmer Durchfluss des Kühlmittels gewährleistet wird, um eine gleichmäßige Kühlung zu erreichen. Vorzugsweise handelt es sich um zylindrische Ausnehmungen. Eine besonders geringe Oberflächenrauheit der Kanäle wird bevorzugt, wobei die arithmetische mittlere Rauheit *R*_{α} zwischen 1 und 250 µm liegt, bevorzugt zwischen 1 und 100 µm, und besonders bevorzugt zwischen 1 und 50 µm. Diese niedrige Rauheit reduziert den Strömungswiderstand, maximiert den Kühlmittelfluss und verbessert die Effizienz der Wärmeabfuhr, wodurch eine präzise Temperaturkontrolle ermöglicht und das Risiko von Materialverformungen durch Überhitzung minimiert wird.

Die "Peripherie" im Sinne der vorliegenden Erfindung bezeichnet die äußeren Oberflächenbereiche des Rührreibschweißwerkzeugs, insbesondere jene Bereiche, die direkt mit dem Werkstück oder der umgebenden Atmosphäre in Kontakt stehen. Im Zusammenhang mit den Austrittsöffnungen bezieht sich die Peripherie insbesondere auf die äußeren Oberflächen des Werkzeugschafts, bevorzugt auf das der Schulter zugewandte Drittel des Werkzeugschafts und/oder die Schultermantelfläche. Diese Bereiche sind besonders relevant für die effiziente Wärmeableitung, da die Prozesswärme während des Rührreibschweißens hauptsächlich am Rührstift und an der Schulter entsteht. Eine gezielte Kühlung dieser Zonen des Werkzeugs ist daher entscheidend, um die thermische Belastung zu reduzieren und die Werkzeuglebensdauer zu erhöhen.

In einigen bevorzugten Ausführungsformen ist der integrierte Kühlkanal linear ausgestaltet. Dies ermöglicht ein geradliniges und verwirbelungsarmes Durchströmen des Kühlmittels, was den Strömungswiderstand minimiert und die Effizienz der Wärmeabfuhr erhöht. Ein linearer Kühlkanal ist besonders vorteilhaft bei Anwendungen, in denen eine schnelle und direkte Kühlung erforderlich ist, da das Kühlmittel ohne Umlenkungen oder Verwirbelungen durch den Kanal geführt wird. Dadurch wird die thermische Belastung des Werkzeugs reduziert und eine gleichmäßige Kühlung über die gesamte Länge des Kanals sichergestellt. Dies führt zu einer verbesserten Temperaturkontrolle und einer längeren Lebensdauer des Werkzeugs.

In alternativen bevorzugten Ausführungsformen ist der integrierte Kühlkanal verdrallt (auch als Helix, Helix-artig oder gewundenen bezeichnet), vorzugsweise mit einer Steigung von 10 bis 60°.Diese verdrallte Ausgestaltung verlängert die effektive Länge des Kühlkanals und somit die Oberfläche, über die der Wärmeaustausch zwischen dem Kühlmittel und dem Formkörper erfolgt. Dies verbessert die Kühlleistung, da mehr Wärme vom Werkzeugschaft auf das Kühlmittel übertragen werden kann. Die Steigung des verdrallten Kanals kann je nach Anwendungsanforderung variieren, wobei eine steilere Steigung eine längere effektivere Kühlstrecke erzeugt.

In weiteren bevorzugten Ausführungsformen können mehrere Kühlkanäle mit der gleichen Steigung versetzt zueinander im Formkörper angeordnet werden. Diese Anordnung sorgt für eine gleichmäßige Wärmeverteilung und verbessert die Kühlleistung, indem sie die Austauschfläche maximiert. Die Kühlkanäle werden so positioniert, dass sie sich nicht kreuzen, da dies Verwirbelungen des Kühlmittels verursachen und die Effizienz der Kühlung beeinträchtigen könnte. Diese Anordnung der Kanäle trägt zu einer kontrollierten und effektiven Wärmeübertragung bei und reduziert unerwünschte Strömungseffekte.

Ein "Austrittskanal" im Sinne der vorliegenden Erfindung beschreibt eine durch den Formkörper des Rührreibschweißwerkzeugs verlaufende Ausnehmung, die dazu eingerichtet ist, das Kühlmittel vom integrierten Kühlkanal zur Peripherie des Werkzeugs zu leiten. Der Austrittskanal verbindet somit den internen Kühlkreislauf mit einer oder mehreren Austrittsöffnungen und sorgt dafür, dass das Kühlmittel gezielt an die Außenseite des Werkzeugs gelangt, um dort die angesammelte Wärme abzuführen.

In einigen bevorzugten Ausführungsformen ist die Austrittsöffnung über einen Austrittskanal mit dem integrierten Kühlkanal verbunden. Dieser Austrittskanal ermöglicht es, das Kühlmittel gezielt aus dem Kühlkanalsystem zur Peripherie des Formkörpers zu leiten, wo es die im Werkzeug entstandene Wärme abführen kann. Die Verbindung des Kühlkanals mit der Austrittsöffnung über den Austrittskanal stellt sicher, dass das Kühlmittel effizient die äußeren Bereiche des Werkzeugs erreicht, insbesondere an den Bereichen, die einer hohen thermischen Belastung ausgesetzt sind, wie die Schultermantelfläche oder der Rührstift. Durch diese Anordnung wird der Wärmetransport verbessert und die Kühlwirkung an den entscheidenden Stellen maximiert.

In weiteren bevorzugten Ausführungsformen ist der Austrittskanal in einem Winkel von 10° bis 90° zur Rotationsachse angeordnet. Diese Anordnung ermöglicht eine gezielte Steuerung des Kühlmittels, wodurch die Wärme an den kritischen Bereichen des Werkzeugs effizient abgeführt werden kann. Der Winkel des Austrittskanals kann je nach den spezifischen Anforderungen des Schweißprozesses variieren, um die optimale Kühlleistung zu gewährleisten. So kann der Kühlstrom gezielt in Richtung des Fügebereichs oder davon weg geleitet werden, um das Temperaturmanagement während des Rührreibschweißens präzise zu steuern. Diese flexible Gestaltung des Austrittskanals verbessert die Kühlwirkung und trägt dadurch maßgeblich zur Verlängerung der Lebensdauer des Werkzeugs bei.

Bevorzugt werden rotationssymmetrische (zylindersymmetrische) Anordnungen (Schoenflies-Symbolik: *Cₙ*) (im Rahmen der Fertigungstoleranzen) für die Ausgestaltung und Anordnung der Kühlkanäle, Austrittsöffnungen und Austrittskanäle verwendet. Besonders bevorzugt gilt *Cₙ* mit n zwischen 1 und 10. Diese symmetrische Anordnung bietet den besonderen Vorteil, dass durch die gleichmäßige Verteilung der Materialausnehmungen im einteiligen Formkörper keine Unwuchten entstehen. Unwuchten könnten bei den hohen prozessbedingten Rotationsgeschwindigkeiten zu Vibrationen und Materialschäden führen, was sowohl die Qualität des Schweißprozesses als auch die Lebensdauer des Werkzeugs und des bearbeiteten Werkstücks negativ beeinflussen könnte.

In speziellen Ausführungsformen können jedoch auch asymmetrische Anordnungen bevorzugt werden, etwa aus Platzgründen oder aufgrund spezieller Geometrien der Schulter oder des Werkzeugschafts. Diese asymmetrischen Anordnungen können für spezifische Anwendungen vorteilhaft sein, wenn besondere Anforderungen an das Werkzeugdesign gestellt werden.

In einigen bevorzugten Ausführungsformen des Rührreibschweißwerkzeug weist der integrierte Kühlkanal (3.0) zwei bis zehn verschiedene Austrittsöffnungen (4.0) auf. Dies stellt einen Kompromiss zwischen Materialintegrität, Belastbarkeit, Herstellungsaufwand und Kühlleistung dar.

Unter einem "Kühlmittel" im Sinne der vorliegenden Erfindung versteht man ein Gas oder eine Flüssigkeit, die durch den integrierten Kühlkanal des Formkörpers geleitet wird, um durch ihre spezifische Wärmekapazität und Wärmeleitfähigkeit die im Rührreibschweißwerkzeug entstehende Wärme effizient abzuführen. Durch den kontinuierlichen Durchfluss des Kühlmittels wird die thermische Belastung des Werkzeugs reduziert, wodurch eine längere Lebensdauer und verbesserte Prozessstabilität erzielt werden.

In bevorzugten Ausführungsformen ist der Kühlkanal für den Transport eines Kühlmittels eingerichtet, wobei das Kühlmittel aus der Liste bestehend aus Wasser, wasserbasierten Emulsionen, Reinölen, Luft, Stickstoff oder Argon ausgewählt wird. Diese Medien bieten eine hohe Flexibilität bei der Anpassung an unterschiedliche Anwendungsanforderungen und Werkstoffe.

In einigen bevorzugten Ausführungsformen wird ein gasförmiges Kühlmittel verwendet, das vorzugsweise aus der Liste bestehend aus Luft, Stickstoff oder Argon ausgewählt wird. Druckluft ist hierbei aufgrund ihrer Verfügbarkeit und Wirtschaftlichkeit besonders vorteilhaft. In Umgebungen, in denen Korrosionsschutz eine Rolle spielt, sind inerte Gase wie Stickstoff oder Argon zu bevorzugen, da sie reaktionsträge sind und die Oxidation des Werkzeugs verhindern. Prinzipiell sind alle Edelgase technisch geeignet, jedoch aufgrund der hohen Kosten meist weniger empfehlenswert. Luft kann in Form von Umgebungsatmosphäre, gereinigter oder synthetischer Luft eingesetzt werden, je nach den spezifischen Anforderungen des Schweißprozesses, speziell Empfindlichkeit gegenüber Luftfeuchtigkeit.

In alternativen bevorzugten Ausführungsformen wird eine Flüssigkeit als Kühlmittel verwendet. Diese wird vorzugsweise aus der Liste bestehend aus Wasser, wasserbasierten Emulsionen oder Reinölen ausgewählt. Wasserbasierte Emulsionen, die neben der wässrigen Phase Polymere, Öle, Stabilisatoren und/oder Hilfsstoffe umfassen können, sind aufgrund ihrer exzellenten Kühlleistung und Vielseitigkeit weit verbreitet in der Kühlung von Werkzeugen. Für spezialisierte Anwendungen, insbesondere in Bereichen mit extremen Anforderungen an die Schmierung und Kühlung, können Reinöle, synthetisch oder mineralölbasiert, oder Mischungen aus beiden verwendet werden. Reinöle bieten den Vorteil einer hohen Beständigkeit und guter Schmierwirkung, während wasserbasierte Emulsionen oft leichter verfügbar und umweltfreundlicher sind.

In einer bevorzugten Ausführungsform des Rührreibschweißwerkzeuges besteht der Formkörper aus einem Material ausgewählt aus der Liste bestehend aus Hartmetall, Cermet oder Keramik. Diese Materialien zeichnen sich durch eine höhere Härte und Abrasionsresistenz aus, erfordern allerdings auch ein gute Wärmeabfuhr, um bei den hohen möglichen Schrittgeschwindigkeiten die Spindel oder den Werkzeugkopf nicht zu beschädigen.

In einigen bevorzugten Ausführungsformen weist das Material des Rührreibschweißwerkzeugs eine Härte im Bereich von 1000 bis 2500 HV(10), bevorzugt 1000 bis 2500 HV(10), bevorzugter 1250 bis 2500 HV(10), auf, wobei das Material besonders bevorzugt aus der Liste ausgewählt wird umfassend Cermet, Hartmetall und Keramik, wobei Keramik insbesondere Schneidkeramiken bezeichnet. Einige bevorzugte, dem Fachmann bekannte Materialien werden in Wilfried König, Fritz Klocke: Fertigungsverfahren 1: Drehen, Fräsen, Bohren. 8. Auflage. Springer, Berlin 2008 beschrieben. Diese hohe Härte sorgt für eine verbesserte Verschleißfestigkeit des Werkzeugs, insbesondere unter den hohen thermischen und mechanischen Belastungen, die während des Schweißprozesses auftreten. Eine solche Härte gewährleistet eine längere Standzeit und Nutzbarkeit des Werkzeugs, was die Effizienz des Schweißprozesses erhöht und die Prozesskosten reduziert.

Als "Hartmetall" im Sinne der vorliegenden Erfindung werden Metallmatrix-Verbundwerkstoffe bezeichnet, bei denen Hartstoffe, insbesondere Metallcarbide (*α*-Phase), in einer metallischen Matrix, bevorzugt aus Cobalt und/oder Nickel (β-Phase), eingebettet sind. Besonders bevorzugt sind Wolframcarbid-Kobalt-Hartmetalle (WC-Co), bei denen Wolframcarbid (WC) als Hauptbestandteil vorliegt, während andere Carbide und/oder Nitride in einem Anteil von weniger als 1% enthalten sein können. Kobalt und/oder Nickel wird dabei als Bindemittel (β-Phase) verwendet, um die mechanischen Eigenschaften zu optimieren. Gemischte Hartmetalle, die neben WC einen Anteil von bis zu 35% an weiteren Metallcarbiden enthalten, werden ebenfalls bevorzugt. Diese Metallcarbide (MC) werden aus der Liste bestehend aus Titancarbid (TiC), Tantalniobcarbid ((Ta,Nb)C), Zirkoniumcarbid (ZrC), Vanadiumcarbid (VC) oder einer Mischung dieser Komponenten ausgewählt und bilden die sogenannte γ-Phase. Diese Kombination verbessert die Härte, Zähigkeit und Temperaturbeständigkeit des Hartmetalls und macht es ideal für anspruchsvolle Anwendungen. Ein besonderer Vorteil der Kombination dieser Materialien mit einem Werkzeug, das über integrierte Kühlkanäle verfügt, besteht in der Reduzierung einer der Hauptverschleißarten, nämlich der thermisch bedingten Diffusion, wie sie beispielsweise bei der Bearbeitung von Stählen auftritt. Durch die effektive Kühlung und damit verbundene Temperatursenkung während des Schweißprozesses wird die Diffusion verringert, was nicht nur den Verschleiß des Werkzeugs reduziert, sondern auch ermöglicht, die Bearbeitungsgeschwindigkeit zu erhöhen und die Produktivität zu steigern.

Besonders bevorzugt weist ein Hartmetall im Sinne der vorliegenden Erfindung eine Dichte zwischen 10 und 15 g/cm³ auf, wobei ein Bereich von 12 bis 15 g/cm³ bevorzugter ist. Diese hohe Dichte trägt zur außergewöhnlichen Stabilität und Verschleißfestigkeit des Werkzeugs bei, was es ideal für Anwendungen unter extremen mechanischen Belastungen macht.

Die maximale Arbeitstemperatur liegt bevorzugt zwischen 450 und 850 °C, was es ermöglicht, das Werkzeug in Hochtemperaturprozessen einzusetzen, ohne dass es zu einem übermäßigen thermischen Verschleiß kommt. Diese hohe Hitzebeständigkeit erhöht die Lebensdauer des Werkzeugs, insbesondere bei der Bearbeitung von schwer schweißbaren Materialien wie Stahl oder hochfesten Legierungen.

Der bevorzugte Wärmeausdehnungskoeffizient α liegt zwischen 4,0 × 10⁻⁶/K und 8,0 × 10⁻⁶/K. Ein niedriger Wärmeausdehnungskoeffizient minimiert das Risiko von thermischen Spannungen und Verformungen, wenn das Werkzeug während des Schweißvorgangs hohen Temperaturschwankungen ausgesetzt ist. Dies verbessert die Maßhaltigkeit und Zuverlässigkeit des Werkzeugs im Einsatz.

Die bevorzugte Wärmeleitfähigkeit λ liegt zwischen 10 und 150 W/m·K, wobei ein Bereich von 15 bis 100 W/m·K bevorzugter ist. Diese gute Wärmeleitfähigkeit sorgt dafür, dass die entstehende Prozesswärme effizient abgeführt wird, was die Überhitzung des Werkzeugs verhindert und die Schweißqualität verbessert. Insbesondere in Kombination mit den integrierten Kühlkanälen ermöglicht dies eine präzise Temperaturkontrolle und verlängert die Standzeit des Werkzeugs erheblich.

Die Druckfestigkeit des Hartmetalls liegt vorzugsweise zwischen 4000 und 7000 MPa, bevorzugt zwischen 5500 und 7000 MPa. Eine hohe Druckfestigkeit ist entscheidend für die Widerstandsfähigkeit des Werkzeugs gegen die extremen Kräfte, die während des Schweißprozesses wirken, wodurch das Risiko von Brüchen oder Verformungen minimiert wird.

Das Elastizitätsmodul (E-Modul) liegt bevorzugt zwischen 500 und 800 GPa, bevorzugt zwischen 550 und 650 GPa. Ein hoher E-Modul gewährleistet, dass das Werkzeug auch bei intensiver mechanischer Beanspruchung steif bleibt und seine Form beibehält, was zu einer höheren Präzision und Konsistenz beim Schweißprozess führt.

Die bevorzugte Vickers-Härte (HV10) liegt im Bereich von 1200 bis 2000 HV, bevorzugt zwischen 1400 und 1900 HV. Diese hohe Härte macht das Werkzeug extrem widerstandsfähig gegen Abrieb und mechanischen Verschleiß, was seine Lebensdauer und Effizienz bei der Bearbeitung harter und abrasiver Materialien weiter erhöht.

In weiteren bevorzugten Ausführungsformen des Werkzeuges, bei dem das Material ein Hartmetall ist, besteht das Hartmetall aus einer Zusammensetzung mit einen Massenanteil von 60 bis 97% α-Phase, bevorzugt Wolframcarbid (WC), 3 bis 20% β-Phase, bevorzugt ausgewählt aus der Liste umfassend oder bestehend aus Co, Ni oder einer Mischung daraus, sowie 0 bis 35% γ-Phase, bevorzugt ausgewählt aus der Liste umfassend oder bestehend aus TiC, (Ta,Nb)C, ZrC, VC oder einer Mischung daraus. Diese Zusammensetzung bietet eine optimale Balance zwischen Härte, Zähigkeit und Temperaturbeständigkeit, was die Leistungsfähigkeit des Werkzeugs unter extremen Bedingungen verbessert.

Unter "Keramik" im Sinne der vorliegenden Erfindung werden insbesondere Schneidekeramiken verstanden. Diese zeichnen sich durch eine hohe Härte sowie hervorragende Verschleißfestigkeit aus, wodurch sie ideal für Anwendungen unter hohen mechanischen und thermischen Belastungen geeignet sind. Schneidkeramiken bieten zudem eine hohe Temperaturbeständigkeit, chemische Stabilität und eine geringe Wärmeleitfähigkeit, was sie besonders für den Einsatz in Hochtemperaturprozessen und bei der Bearbeitung harter Werkstoffe wie Metalle und Legierungen prädestiniert.

In anderen bevorzugten Ausführungsformen wird die Keramik des Rührreibschweißwerkzeugs aus Materialien ausgewählt, die aus der Liste umfassend Aluminiumoxid (CA), Mischkeramik (CM), whiskerverstärkte Keramik (CR), Siliciumcarbid (SC), Sialon oder Siliciumnitrid-Schneidkeramik (CN) bestehen. Diese keramischen Materialien zeichnen sich durch ihre außergewöhnliche Härte und Verschleißfestigkeit sowie ihre hohe Temperaturbeständigkeit aus, wodurch das Werkzeug auch bei besonders anspruchsvollen Schweißvorgängen leistungsfähig bleibt. Weitere informationen zu den Keramikklassen CA, CM, CR, CN sind beispielsweise der DIN ISO 513:2014-05 zu entnehmen.

In weiteren bevorzugten Ausführungsformen weist zumindest das Material der Schulter und/oder des Rührstifts des Rührreibschweißwerkzeugs eine Beschichtung auf. Diese Beschichtung wird vorzugsweise durch ein PVD- (Physical Vapor Deposition) oder CVD-Verfahren (Chemical Vapor Deposition) aufgebracht. Beschichtungen dieser Art bieten zusätzlichen Schutz vor Verschleiß, Korrosion und Hitzeeinwirkung, was die Lebensdauer und Leistung des Werkzeugs weiter erhöht.

In einer besonders bevorzugten Ausführungsform besteht die Beschichtung des Werkzeugs aus einem Beschichtungsmaterial, das aus der Liste bestehend aus Chemical Vapor Deposition-Diamant (CVD-Diamant), Titanaluminiumnitrid (TiAIN), Titannitrid (TiN), Aluminiumtitannitrid (AlTiN), Titancarbidnitrid (TiCN), Zinknitrid (ZnN), Zirkonnitrid (ZrN), DLC (Diamond-Like Carbon), PKD (polykristalliner Diamant), oder PCBN (polykristallines kubisches Bornitrid) ausgewählt wird. Diese Materialien bieten außergewöhnliche Festigkeit und Widerstandsfähigkeit gegen Verschleiß und Hitze, wodurch die Schweißqualität weiter optimiert wird und das Werkzeug besonders langlebig ist.

Unter "Cermet" im Sinne der vorliegenden Erfindung werden Metallmatrixverbundwerkstoffe verstanden, die nicht elektrisch leitfähig sin und sich so von Hartmetallen abgrenzen, insbesonderer Verbundwerkstoffe mit Titancarbid (TiC) und Nickelnitrid (TiN) als keramische Hartstoffe.

In einigen bevorzugten Ausführungsformen weist der Werkzeugschaft ein Haltemittel zur sicheren Befestigung des Rührreibschweißwerkzeugs an der Werkzeugaufnahme auf. Dieses Haltemittel sorgt für eine stabile Verbindung zwischen dem Werkzeug und der Aufnahmeeinheit, um ein Lösen oder Verrutschen des Werkzeugs während des Schweißprozesses zu verhindern. Dadurch wird nicht nur die Präzision des Schweißvorgangs verbessert, sondern auch die Sicherheit und Lebensdauer des Werkzeugs erhöht.

In weiteren bevorzugten Ausführungsformen wird das Haltemittel ausgewählt aus der Liste bestehend aus: Gewinde, Nut, Weldon-Aufnahme, Flächenspannfutter, Kerbe, Ausnehmung oder Schiene. Diese verschiedenen Befestigungsoptionen ermöglichen eine flexible Anpassung des Werkzeugs an unterschiedliche Aufnahmesysteme und sorgen dafür, dass das Werkzeug fest und sicher in der Werkzeugaufnahme verankert bleibt. Insbesondere die Verwendung eines Gewindes kann in Verbindung mit einem Entgegenwirken der Drehrichtung des Werkzeugs zusätzlichen Halt bieten, was die Effizienz und Zuverlässigkeit während des Rührreibschweißprozesses weiter steigert.

Die Erfindung betrifft weiterhin ein Rührreibschweißwerkzeughaltersystem, das ein Rührreibschweißwerkzeug im Sinne der vorliegenden Erfindung umfasst. Das Rührreibschweißwerkzeug ist dabei mittels des Haltemittels wirkverbunden in einem Werkzeughalter angeordnet, der über eine integrierte Kühlmittelzufuhr verfügt. Diese Kühlmittelzufuhr ermöglicht eine effiziente Kühlung des Werkzeugs während des Schweißprozesses und sorgt dafür, dass die entstehende Wärme schnell und zuverlässig abgeleitet wird, um thermische Belastungen zu minimieren. Dieses Kann direkt mit einer entsprechend eingerichteten Werkzeugspindel verbunden werden. Diese Kombination ermöglicht es, die Größe des Werkzeugschafts zu reduzieren und somit die benötigte Menge des kostenintensiven Materials im Sinne der vorliegenden Erfindung zu verringern. Teure und anspruchsvoll zu verarbeitende Materialien wie Keramik, Hartmetall oder Cermet können durch kostengünstigere Alternativen wie Werkzeugstahl ersetzt werden, der als Material für den Werkzeughalter ausreicht. Da der Werkzeughalter im Vergleich zum Rührreibschweißwerkzeug geringeren mechanischen und thermischen Belastungen ausgesetzt ist, bietet Werkzeugstahl eine ausreichende Stabilität und Haltbarkeit, ohne die Leistungsfähigkeit des Gesamtsystems zu beeinträchtigen.

Die Erfindung betrifft weiterhin ein Rührreibschweißsystem, das ein Rührreibschweißwerkzeug im Sinne der vorliegenden Erfindung umfasst. Das Werkzeug ist dabei wirkverbunden an einer Werkzeugspindel angeordnet, wobei die Werkzeugspindel eine Kühlmittelzufuhr aufweist. Diese Anordnung ermöglicht eine effiziente Kühlung des Werkzeugs während des Schweißvorgangs, indem das Kühlmittel durch die Spindel direkt zum Werkzeug geleitet wird, wodurch die Wärme effizient abgeführt und eine optimale Leistung des Schweißsystems sichergestellt wird.

Unter einer "Werkzeugspindel" im Sinne der vorliegenden Erfindung werden alle Antriebssysteme verstanden, die geeignet sind, die für das Rührreibschweißen erforderliche Rotation und den Vorschub des Werkzeugs bereitzustellen. Diese Antriebssysteme sorgen dafür, dass das Rührreibschweißwerkzeug mit der notwendigen Geschwindigkeit rotiert und gleichzeitig in das Werkstück eingedrückt wird, um den gewünschten Schweißprozess zu ermöglichen. Die Werkzeugspindel kann dabei mechanische, elektrische oder hydraulische Antriebe umfassen, die auf die spezifischen Anforderungen des Schweißvorgangs abgestimmt sind.

Die Erfindung betrifft weiterhin eine Methode zur Herstellung des Rührreibschweißwerkzeugs. Diese Methode umfasst die folgenden Schritte:
a) Bereitstellung der Ausgangsstoffe in Pulverform mit definierten Eigenschaften, insbesondere Partikelgrößen,
b) Homogenisierung der Ausgangsstoffe,
c) Kaltformung des Formkörpers und anschließendes Sintern, oder
d) Additive Herstellung des Formkörpers,
e) Nachbearbeitung des Formkörpers, insbesondere durch Schleifen.

Diese Methode ermöglicht eine präzise Fertigung des Werkzeugs unter Berücksichtigung spezifischer Materialanforderungen und Prozessbedingungen, um die gewünschte Härte, Festigkeit und Verschleißfestigkeit zu erzielen.

Dabei ist "Sintern" im Sinne der vorliegenden Erfindung ein Verfahren, bei dem feinkörnige Pulvermaterialien unter erhöhter Temperatur, jedoch unterhalb des Schmelzpunktes, verdichtet und verbunden werden. Beim Sintern kommt es zu einer Diffusion der Partikel an den Grenzflächen, wodurch ein festes Bauteil mit hoher Dichte und Festigkeit entsteht. Dieses Verfahren wird eingesetzt, um Formkörper aus Pulvermaterialien wie Metallcarbiden oder Keramiken herzustellen und dabei eine hohe Präzision und Materialfestigkeit zu erreichen.

Dabei umfasst "Additive Herstellung" im Sinne der vorliegenden Erfindung Verfahren wie selektives Lasersintern (SLS) und 3D-Druck, bei denen der Formkörper schichtweise aus einem Pulvermaterial aufgebaut wird. Diese Verfahren ermöglichen es, komplexe Geometrien direkt aus CAD-Daten zu erstellen, ohne den Einsatz von herkömmlichen Formen oder Werkzeugen. Durch die präzise Steuerung des Lasers oder des Druckkopfs wird das Pulvermaterial lokal erhitzt und verbunden, um den Formkörper Schicht für Schicht zu erzeugen. Diese Technologie bietet große Flexibilität bei der Gestaltung des Werkzeugs und ermöglicht eine materialeffiziente Fertigung. Dadurch können auch komplexe Kühlkanäle und Austrittskanäle präzise und effizient in den Formkörper integriert werden. Diese Technik ermöglicht es, anspruchsvolle Geometrien und verzweigte Kühlkanalsysteme zu realisieren, die für eine gleichmäßige und effektive Wärmeableitung sorgen, ohne dass aufwendige nachträgliche Bearbeitungsschritte erforderlich sind.

Hierhin bezeichnet "Kaltformung" im Sinne der vorliegenden Erfindung ein Verfahren, bei dem der Formkörper aus Pulvermaterialien ohne den Einsatz von Hitze geformt wird. Durch hohen mechanischen Druck werden die Pulverpartikel verdichtet und in die gewünschte Form gebracht. Anschließend wird der geformte Körper durch Sintern weiter verdichtet und gefestigt. Dieses Verfahren ist besonders vorteilhaft, um Formkörper mit hoher Dichte und geringer Porosität herzustellen, ohne dass während des Formens zusätzliche Wärmeenergie zugeführt werden muss. Vorteilhafterweise können Platzhalter wie Paraffin oder andere geeignete Materialien eingesetzt werden, um während des Formgebungsprozesses gezielt Ausnehmungen für Kühlkanäle oder Austrittskanäle im Formkörper zu schaffen. Diese Platzhalter werden während des anschließenden Sinterprozesses entfernt, wodurch präzise Hohlräume entstehen, die für die Kühlung des Werkzeugs notwendig sind. Dieser Ansatz ermöglicht eine effiziente Herstellung komplexer Strukturen, ohne dass nachträgliche Bearbeitungsschritte zur Erstellung der Kanäle erforderlich sind.

Im Sinne der vorliegenden Erfindung bezeichnet "Nachbearbeiten" die abschließenden Verarbeitungsschritte, die nach dem Formgebungs- und Sinterprozess durchgeführt werden, um die endgültige Form, Präzision und Oberflächenqualität des Rührreibschweißwerkzeugs zu gewährleisten. Insbesondere bei der Bearbeitung von Keramiken, Cermets und Hartmetallen, die aufgrund ihrer hohen Härte und Verschleißfestigkeit schwer zu bearbeiten sind, spielen diese Nachbearbeitungsschritte eine zentrale Rolle. Das Nachbearbeiten im Sinne der vorliegenden Erfindung wird bevorzugt ausgewählt aus der Liste umfassend Schleifen, Läppen, Polieren, Erodieren (EDM), Bohren, Fräsen, Beschichten und Drahterodieren. Diese Verfahren tragen dazu bei, die endgültige Form, Präzision und Oberflächenqualität des Rührreibschweißwerkzeugs zu gewährleisten.

Schleifen wird eingesetzt, um präzise Maße und glatte Oberflächen zu erzeugen. Dieser Prozess ist besonders effektiv bei Hartmetallen und Keramiken, um maßhaltige Passungen und reduzierte Oberflächenrauheit zu erreichen. Dadurch wird die Reibung verringert und die Lebensdauer des Werkzeugs verlängert, da Oberflächenverschleiß minimiert wird.

Läppen und Polieren werden verwendet, um die Oberflächenqualität weiter zu optimieren. Insbesondere bei Kontaktflächen wie der Schulter oder dem Rührstift führen diese Verfahren zu einer extrem glatten Oberfläche, die den Verschleiß und die Reibung im Einsatz verringert. Polieren kann zudem die Korrosionsbeständigkeit und die ästhetische Qualität des Werkzeugs verbessern.

Erodieren (EDM) wird bevorzugt zur Bearbeitung von Hartmetallen eingesetzt, um präzise Konturen und komplexe Geometrien in das Material zu bringen. EDM ist besonders geeignet, um feine Strukturen zu erzeugen, die mit herkömmlichen mechanischen Verfahren schwer erreichbar sind. Der Vorteil dieses Verfahrens liegt in seiner Fähigkeit, ohne direkten Kontakt mit dem Material zu arbeiten, was Materialspannungen und Risse verhindert.

Bohren und Fräsen sind mechanische Verfahren, die verwendet werden, um zusätzliche Bearbeitungen wie das Einbringen von Gewinden oder das Präzisieren von Kühl- und Austrittskanälen durchzuführen. Diese Techniken ermöglichen es, funktionale Elemente hinzuzufügen, die für die Integration des Werkzeugs in das Gesamtsystem oder für die Kühlung notwendig sind.

Beschichten kann als Nachbearbeitungsschritt dienen, um die Oberfläche des Werkzeugs zu härten oder seine Korrosions- und Verschleißfestigkeit zu erhöhen. Beschichtungen, die auf Basis von PVD- oder CVD-Verfahren abgeschieden werden verbessern die Leistungsfähigkeit des Werkzeugs unter extremen Bedingungen und verlängern seine Lebensdauer, indem sie den direkten Verschleiß des Grundmaterials verhindern.

### AUSFÜHRUNGSBEISPIELE

Anhand folgender Figuren und Ausführungsbeispiele wird die vorliegende Erfindung näher erläutert, ohne die Erfindung auf diese zu beschränken.

Dabei zeigt
- **Fig. 1:**: zeigt eine schematische Darstellung eines Rührreibschweiß-werkzeuges in seitlicher (1A; 1C) und frontaler Ansicht (1B; 1D).
- **Fig. 2:**: zeigt eine schematische Darstellung eines Rührreibschweiß-werkzeuges in seitlicher (2A) und frontaler Ansicht (2B) und Rückansicht (2C).
- **Fig. 3:**: zeigt eine schematische Darstellung von Ausschnitten verschiedener Rührreibschweißwerkzeugen in frontaler (3A; 3C; 3E; 3G) und seitlicher Ansicht (3B; 3D; 3F; 3H).
- **Fig. 4:**: zeigt verschiedene bevorzugte Ausgestaltungen von Austrittsöffnungen (4.0) und Austrittskanälen (5.0) in frontaler Ansicht (4A bis 4E).
- **Fig. 5:**: zeigt eine schematische Darstellung eines Rührreibschweißwerkzeughaltersystems, bestehend aus einem Werkzeughalter (5A) und einem Rührreibschweißwerkzeug, dargestellt in seitlicher Ansicht (5B) und in frontaler Ansicht (5C).
- **Fig. 6:**: zeigt schematische Darstellungen verschiedener bevorzugter Kühlkanäle (3.0) im Querschnitt durch einen Werkzeugschaft (1.4), in seitlicher Ansicht (6A, 6C, 6E, 6G, 6I) sowie in frontaler Ansicht (6B, 6D, 6F, 6H, 6J).

In den verschiedenen Abbildungen sind hinsichtlich ihrer Funktion gleichwertige Teile immer mit den gleichen Bezugszeichen versehen, wobei aus Gründen der Übersichtlichkeit nicht alle gleichwertigen Teile gekennzeichnet sind, insbesondere wenn sie in mehrfacher Form auftreten. Nachfolgend wird die vorliegende Erfindung anhand von Ausführungsbeispielen unter Bezugnahme auf die beiliegenden Zeichnungen näher beschrieben. Diese erläutern die vorliegende Erfindung näher, ohne die Erfindung auf diese zu beschränken. Insbesondere sind in den einzelnen Figuren gezeigte und zu dem jeweiligen Beispiel beschriebene Merkmale nicht auf das jeweilige Einzelbeispiel beschränkt. Dabei zeigen:

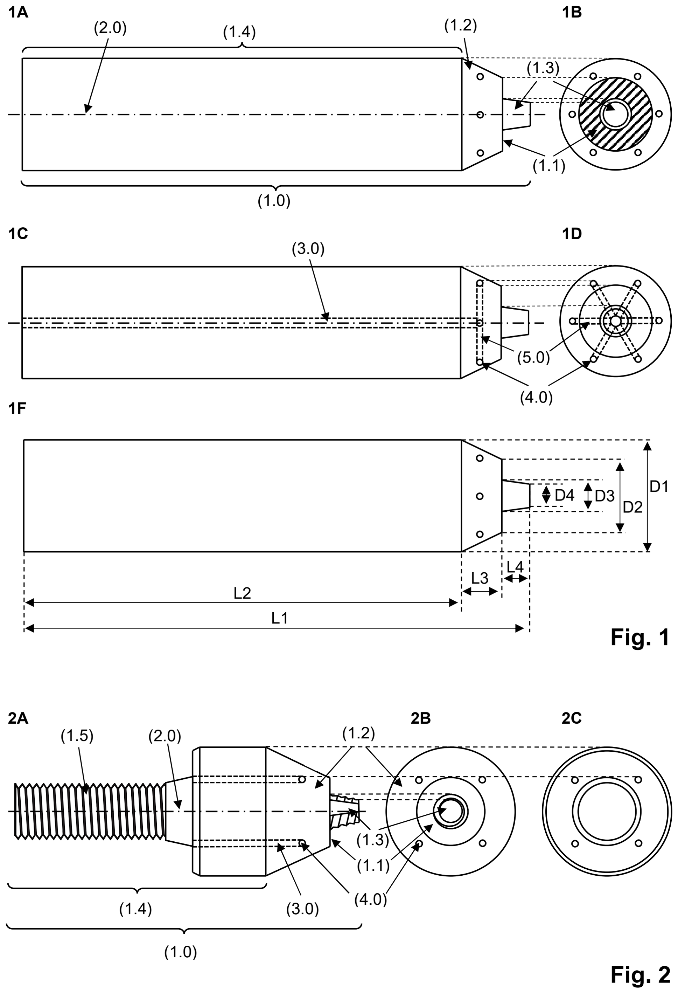

Die in **Fig. 1** dargestellte Ausführungsform zeigt einen Formkörper (1.0) eines erfindungsgemäßen Rührreibschweißwerkzeuges in seitlicher Ansicht **(1A, 1C, 1F**) und frontaler Ansicht (1B, **1D**). Der Formkörper (1.0) mit der Länge L1 und der Abmessung D1 weist eine zentral angeordnete Rotationsachse (2.0) und einen zylinderförmigen Werkzeugschaft (1.4) mit der Länge L2 auf, der in dieser Ausführungsform gleichzeitig als Werkzeugaufnahme dient. Die Schultermantelfläche (1.2) mit der Länge L3 verjüngt sich, wie in den meisten bevorzugten Ausführungsformen, in diesem spezifischen Ausführungsbeispiel vom Werkzeugschaft (Durchmesser D1) ab und mündet in die Schulter (1.1) mit einer Abmessung D2, die in **Fig. 1B** schraffiert dargestellt ist. Der exemplarische Rührstift (1.3), der den Formkörper abschließt, weist in dieser Ausführungsform eine kegelstumpfförmige Geometrie auf, die durch einen Abmessung D3 an der Schulter und einem terminalen Abmessung D4 mit einer Länge L4 gekennzeichnet ist. Ein zentral gelegener Kühlkanal (3.0) verläuft entlang der Rotationsachse (2.0), wie in **Fig. 1C** und **1D** zu schematisch dargestellt ist. Dieser Kühlkanal ist mit sechs sternförmig angeordneten Austrittskanälen (5.0) verbunden, die im 90°-Winkel zur Rotationsachse ausgerichtet sind. Diese Kanäle führen zu sechs symmetrisch verteilten Austrittsöffnungen, die gleichmäßig auf der Schultermantelfläche (1.2) positioniert sind. Diese Anordnung gewährleistet eine gleichmäßige Kühlung und Wärmeableitung, insbesondere in den Bereichen, die während des Schweißprozesses den höchsten thermischen Belastungen ausgesetzt sind.

**Figur 2** zeigt den Formkörper (1.0) eines weiteren erfindungsgemäßen Rührreibschweißwerkzeugs. In diesem Ausführungsbeispiel umfasst der Formkörper (1.0) eine Schulter (1.1), an der ein Werkzeugstift (1.3) angeordnet ist, welcher in dieser Ausführungsform mit einem Gewinde versehen ist. Der Werkzeugstift ermöglicht eine präzise Führung während des Schweißprozesses. Das Werkzeug ist mit vier integrierten Kühlkanälen ausgestattet, die jeweils in einer separaten Austrittsöffnung (4.0) münden. Diese Austrittsöffnungen sind in der Schultermantelfläche (1.2) positioniert, um eine effiziente Wärmeableitung aus den thermisch stark belasteten Bereichen zu gewährleisten. Der Werkzeugschaft (1.4) verfügt zudem über ein Gewinde, das als Haltemittel (1.5) dient und für die Befestigung des Werkzeugs an einem Werkzeughalter ausgelegt ist. Das Gewinde ist entgegengesetzt zur Drehrichtung des Werkzeugs gewunden, was verhindert, dass sich das Werkzeug während des Fügebetriebs lockert. Diese Ausgestaltung erhöht die Prozesssicherheit und gewährleistet eine stabile Verbindung zwischen Werkzeug und Halter.

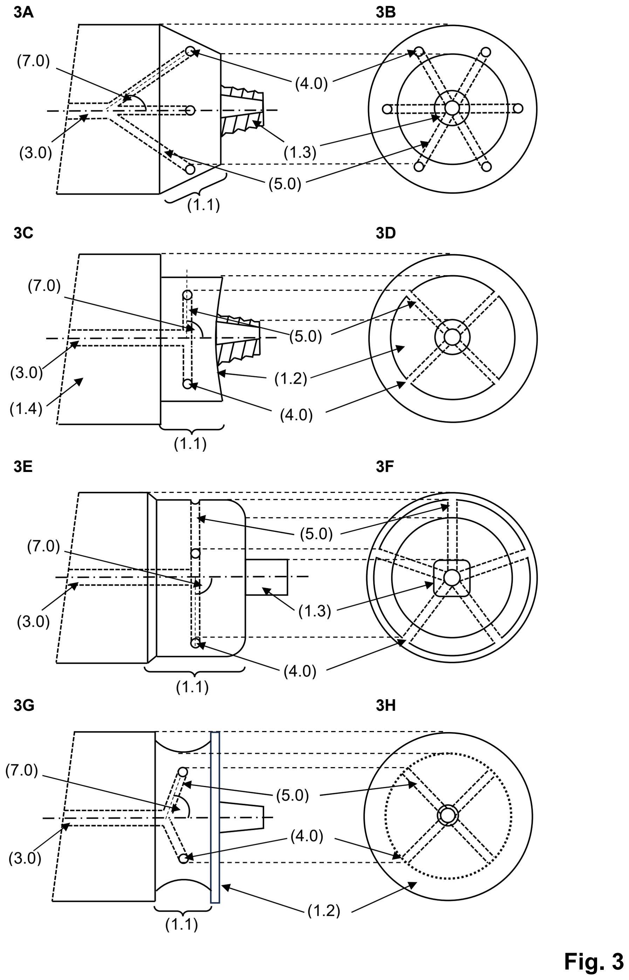

**Figur 3** zeigt vier verschiedene Ausschnitte des Rührreibwerkzeuges im Sinne der vorliegenden Erfindung:
In **3A** (seitliche Ansicht) und **3B** (frontale Ansicht) wird ein Rührreibschweißwerkzeug mit einem zentralen Kühlkanal (3.0) dargestellt, der über sechs Austrittskanäle (5.0) mit sechs gleichmäßig beabstandeten Austrittsöffnungen (4.0) verbunden ist. Diese Öffnungen sind an den Ecken eines gleichseitigen Sechsecks auf der Schultermantelfläche (1.2) angeordnet, die hier kegelstumpfförmig ausgeführt ist. Die Austrittskanäle sind in einem Winkel von 35° (7.0) zur Rotationsachse (2.0) geneigt, was eine effiziente Ableitung des Kühlmittels aus den thermisch belasteten Bereichen des Werkzeugs ermöglicht. Durch den Winkel wird der Kühlstrom am Fügebreich vorbeigeführt.

Eine weitere Ausgestaltung wird in **3C** (seitliche Ansicht) und **3D** (frontale Ansicht) gezeigt. In diesem Beispiel ist die Schulter (1.1) konkav ausgeführt, während die Schultermantelfläche (1.2) gerade ausgestaltet ist und in einem 90°-Winkel zur Rotationsachse steht, bevor sie in den Werkzeugschaft (1.4) mündet. Der zentrale Kühlkanal (3.0) ist mit vier Austrittskanälen (5.0) verbunden, die im rechten Winkel (90°) zur Rotationsachse angeordnet sind. Diese Kanäle führen zu vier gleichmäßig verteilten Austrittsöffnungen, die an der Schultermantelfläche angeordnet sind und eine gleichmäßige Wärmeabfuhr gewährleisten.

In **3E** (seitliche Ansicht) und **3F** (frontale Ansicht) wird eine weitere Ausführungsform eines Rührreibschweißwerkzeugs gezeigt, bei der der Rührstift (1.3) eine quadratische Grundfläche mit abgerundeten Ecken aufweist. Die Schultermantelfläche (1.2) ist in dieser Ausgestaltung gebogen und verjüngt sich unmittelbar an dem Übergang zum Werkzeugschaft (1.4). Die Austrittskanäle (5.0) sind so angeordnet, dass sie zu fünf Austrittsöffnungen (4.0) führen, die an den Ecken eines gleichseitigen Fünfecks auf der Schultermantelfläche positioniert sind. Die Austrittsöffnungen (4.0) sind gleichmäßig verteilt und die Austrittskanäle (5.0) stehen im einem Winkel (7.0) von 90° zur Rotationsachse. Diese Anordnung gewährleistet eine gleichmäßige Kühlung der Schultermantelfläche.

In **3G** (seitliche Ansicht) und **3H** (frontale Ansicht) wird eine weitere Ausführungsform eines Rührreibschweißwerkzeugs gezeigt, bei der die Schultermantelfläche (1.2) konkav ausgestaltet ist. Die Schulter (1.1) selbst ist in dieser Ausführung wieder verbreitert, was die Stabilität und den Kontaktbereich mit dem Werkstück erhöht. Diese Form begünstigt eine gleichmäßige Wärmeverteilung und verbessert die Führung des Werkzeugs während des Schweißprozesses. Ein zentral angeordneter Kühlkanal (3.0) ist in dieser Ausführungsform mit vier Austrittskanälen (5.0) verbunden, die in einem Winkel von 73° zur Rotationsachse angeordnet sind. Die vier Austrittsöffnungen (4.0) sind gleichmäßig auf der Schultermantelfläche (1.2) positioniert, um eine effiziente Wärmeabfuhr sicherzustellen und die Kühlung des Werkzeugs zu optimieren.

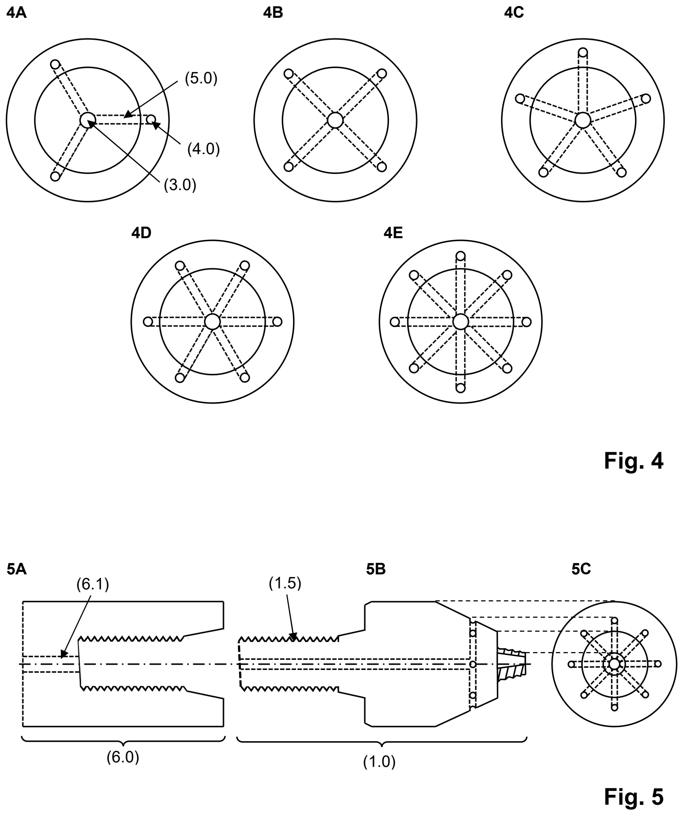

**Figur 4** zeigt schematisch fünf verschiedene Frontalansichten des Rührreibwerkzeuges im Sinne der vorliegenden Erfindung mit besonderen Fokus auf exemplarische Anordnungen der Austrittsöffnungen.

Dabei zeigt **4A** drei Austrittsöffnungen (4.0), die gleichmäßig beabstandet in einer dreieckigen Grundform angeordnet sind und jeweils durch einen Austrittskanal (5.0) mit einem Kühlkanal (3.0) verbunden sind. **4B** zeigt vier Austrittsöffnungen (4.0), die an den Ecken eines gleichseitigen Vierecks positioniert sind und ebenfalls mit entsprechenden Austrittskanälen (4.0) verbunden sind. **4C** zeigt fünf Austrittsöffnungen (4.0), die gleichmäßig an den Ecken eines gleichseitigen Fünfecks angeordnet sind, wobei jeder Austrittskanal mit einem zentralen Kühlkanal verbunden ist. **4D** stellt sechs Austrittsöffnungen (4.0) dar, die symmetrisch an den Ecken eines gleichseitigen Sechsecks angeordnet sind und über Austrittskanäle (5.0) mit dem Kühlkanal (3.0) verbunden sind. **4E** zeigt acht Austrittsöffnungen (4.0), die gleichmäßig an den Ecken eines gleichseitigen Achtecks angeordnet sind, was eine besonders gleichmäßige Kühlung ermöglicht. Auch hier sind die Austrittsöffnungen über entsprechende Austrittskanäle (5.0) mit einem zentralen Kühlkanal (3.0) verbunden.

**Figur 5** zeigt ein Rührreibschweißwerkzeughaltersystem, aufweisend ein Rührreibschweißwerkzeug, der Formkörper (1.0) ist in 5B dargestellt. Dabei weist der Werzeugkörper ein Haltemittel (1.5), hierhin ausgestaltet als Gewinde entgegenläufig der Drehrichtung des Rührreibschweißwerkzeug im Fügeprozess, welches in den Werkzeughalter (6.0), der ein entsprechendes Aufnahmegewinde aufweist, in Wirkverbindung gebracht werden kann. Der Werkzeughalter (6.0) weist dabei eine integrierte Kühlmittelzufuhr (6.1) auf. Vorteilhaft dichtet die Gewindeverbindung zwischen dem Formkörper (1.0) und dem Werkzeughalter (6.0) gasdicht ab, wodurch beliebige Kühlmittel, hierbei exemplarisch Luft, über den Werkzeughalter mit der Kühlmittelzufuhr (6.1) bereitgestellt werden können.

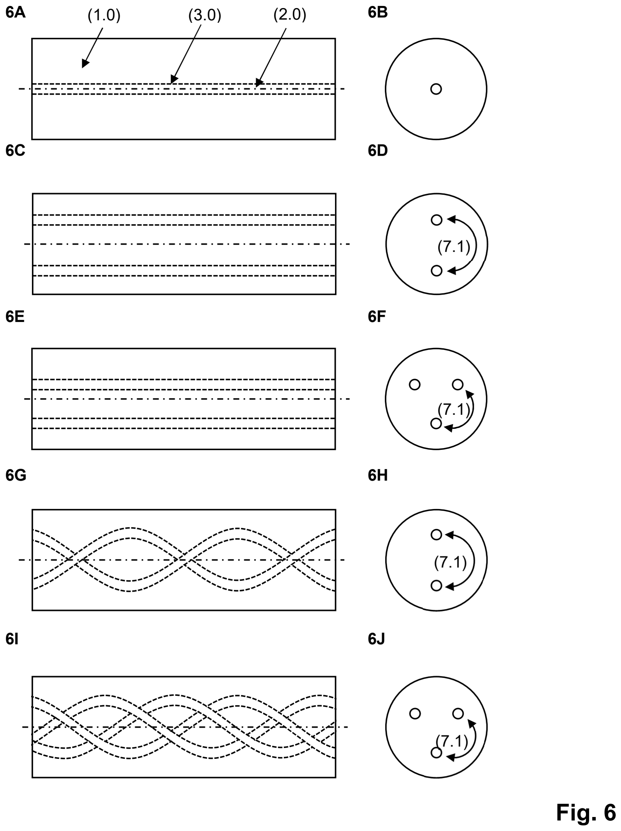

**Figur 6** zeigt schematisch Querschnitte verschiedener exemplarischer Anordnungen von Kühlkanälen (4.0) in dem Formkörper (1.0). **6A** (seitliche Ansicht) und **6B** (frontale Ansicht) zeigen einen zentral angeordneten Kühlkanal, der entlang der Rotationsachse (2.0) verläuft. **6C** (seitliche Ansicht) und **6D** (frontale Ansicht) zeigen zwei parallel versetzte Kühlkanäle, die zur Rotationsachse (2.0) in einem Kanalwinkel von 180° (7.1) zueinander im Querschnitt angeordnet sind. Diese Anordnung sorgt für eine gleichmäßige Kühlung bei symmetrischer Gewichtsverteilung. **6E** (seitliche Ansicht) und **6F** (frontale Ansicht) zeigen drei gleichmäßig beabstandete Kühlkanäle, wodurch der Formkörperausschnitt eine *C₃*-Symmetrie aufweist. Die Kühlkanäle stehen in einem Kanalwinkel von 120° (7.1) zueinander, was eine ausgewogene Kühlverteilung gewährleistet. **6G** (seitliche Ansicht) und **6H** (frontale Ansicht) zeigen zwei verdrallte, zueinander versetzte Kühlkanäle mit einem Steigungswinkel von 30°. Diese Kühlkanäle stehen im Querschnitt stets in einem 180°-Winkel zueinander, diese Anordnung ermöglich eine effektiv längeren Kühlweg und Kühlung. **6I** (seitliche Ansicht) und **6J** (frontale Ansicht) zeigen drei verdrallte, zueinander versetzte Kühlkanäle (4.0), die im Querschnitt in einem Winkel von 120° zueinander stehen. Diese Anordnung ermöglicht eine gleichmäßige Kühlung über eine größere Fläche des Formkörpers und verbessert die thermische Effizienz durch die Verlängerung der effektiven Kühlstrecke.

Der Singular schließt den Plural ein, es sei denn, aus dem Kontext geht eindeutig etwas anderes hervor. Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele. Sofern in dieser Anmeldung der Begriff "kann" verwendet wird, handelt es sich sowohl um die technische Möglichkeit als auch um die tatsächliche technische Umsetzung.

Tabelle 1 und Tabelle 2 listen exemplarisch bevorzugte Hartmetalle HM-1 bis HM-11 und Keramiken K-1 bis K-9 auf, jede davon eine eigene Ausführungsform der Erfindung, die diese jedoch nicht auf diese Materialien einschränkt.

**Tabelle 1: Bevorzugte Hartmetalle (TWB = Temperaturwechselbeständigkeit; max. Temp = Maximale Arbeitstemperatur)**

| | **HM-1** | **HM-2** | **HM-3** | **HM-4** | **HM-5** | **HM-6** | **HM-7** | **HM-8** | **HM-9** | **HM-10** | **HM-11** |
|---|---|---|---|---|---|---|---|---|---|---|---|
| Korngröße | | | | | | | | 0,7 µm | 1,4µm | 0,4 µm | 4,0µm |
| α-Phasen (WC) | - | 60% | 64,5% | 72,7% | 78,5% | 84,5% | 82,5% | 94,0% | 94,0% | 91,0% | 91,0% |
| β-Phase (Co) | - | 9,0 | 10,0% | 10,0% | 11,5% | 6,0% | 6,5% | 6,0% | 6,0% | 9,0% | 9,0% |
| γ-Phase (MC) | - | 31% | 25,5% | 17,3% | 10% | 9,5% | 11,0% | - | - | - | - |
| Dichte (g/cm³) | 14,90 | 10,60 | 11,70 | 12,60 | 13,00 | 13,30 | - | 14,90 | 14,90 | 14,60 | 14,60 |
| max. Temp.(°C) | 650 | - | - | - | - | - | - | - | - | - | - |
| Wärmeausdehnung α (10⁻⁶/K) | 4,80 | 7,20 | 7,90 | 6,70 | 6,40 | 6,00 | 6,00 | 5,50 | 5,50 | 5,60 | 5,60 |
| Wärmeleitfähigkeit λ (W/m·K) | 90 | 25,00 | 20,00 | 45,00 | 60,00 | 83,00 | 90,00 | 80,00 | 80,00 | 70,00 | 70,00 |
| TWB (ΔT °C) | 216 | - | - | - | - | - | - | - | - | - | - |
| Härte (HV10) | 1760 | 1560 | 1500 | 1490 | 1380 | 1700 | 1550 | 1800 | 1575 | 1420 | 1210 |
| E-Modul (GPa) | 623 | 520 | 500 | 550 | 560 | 580 | 570 | 630 | 630 | 590 | 590 |
| Biegefestigkeit (4P, MPa) | 3200 | 1700 | 2000 | 2200 | 2250 | 1750 | 1900 | 2000 | 2000 | 2350 | 2350 |
| Druckfestigkeit (MPa) | 6400 | 4500 | 5200 | 4600 | 4450 | 5950 | 5500 | 4550 | 4250 | 4000 | 4000 |

**Tabelle 2: Bevorzugte Keramiken (TWB = Temperaturwechselbeständigkeit; max. Temp = Maximale Arbeitstemperatur)**

| | **K-1** | **K-2** | **K-3** | **K-4** | **K-5** | **K-6** | **K-7** | **K-8** | **K-9** |
|---|---|---|---|---|---|---|---|---|---|
| Bezeichnung | CA | CA | SC | CA | CA | CR | CM | CM | CN |
| Hauptbestandteil | Si₃N₄ | ZrO₂ | SiC | 96% Al₂O₃ | 85% ZrO₂ | 65% Al₂O₃ | 85% Al₂O₃ | 70% Al₂O₃ | 90% Si₃N₄ |
| Zusatz 1 | - | - | - | 4% ZrO₂ | 15% ZrO₂ | 20% SiC | 5% TiC | 30% Ti(C,N) | 10% Y₂O₃ |
| Zusatz 2 | - | - | - | - | - | 15% ZrO₂ | 10% ZrO₂ | - | - |
| Dichte (g/cm³) | 3,20 | 6,00 | - | 4,00 | 4,2 | 3,7 | 4,1 | 4,3 | 3,3 |
| max. Temp.(°C) | 1200 | 1000 | - | 1400 | 1400 | 1275 | 1300 | 1300 | 1300 |
| Wärmeausdehnung α (10⁻⁶/K) | 3,40 | 10,00 | - | - | - | - | - | - | - |
| Wärmeleitfähigkeit λ (W/m·K) | 22 | <2 | - | 8,0 | 8,0 | - | 8,0 | 8,0 | 3,4 |
| TWB (ΔT °C) | 830 | 280 | - | - | - | - | - | - | - |
| Härte (HV10) | 1650 (HV0.5) | 1150 (HV0.5) | >1850 (HV10) | 1730 | 1750 | 1900 | 1730 | 1930 | 1750 |
| E-Modul (GPa) | 320 | 205 | 205 | 380 | 410 | 390 | 390 | 400 | 300 |
| Biegefestigkeit (4P, MPa) | 1000 | 1300 | >800 | 700 | 800 | 900 | 650 | 620 | 800 |
| Druckfestigkeit (MPa) | 2500 | 3000 | 3000 | 5000 | 4700 | - | 4800 | 4800 | 4000 |
| Schlagzähigkeit (MPa·m½) | 7 | 12 | 5 | - | - | - | - | - | - |
| Weibull Modul | 14 | 25 | 19 | - | - | - | - | - | - |

### BEZUGSZEICHENLISTE

- (1.0): Formkörper
- (1.1): Schulter
- (1.2): Schultermantelfläche
- (1.3): Rührstift
- (1.4): Werkzeugschaft
- (1.5): Haltemittel
- (2.0): Rotationsachse
- (3.0): Integrierter Kühlkanal
- (4.0): Austrittsöffnung
- (5.0): Austrittskanal
- (6.0): Werkzeughalter
- (6.1): Kühlmittelzufuhr
- (7.0): Winkel
- (7.1): Kanalwinkel

## Patentansprüche

1. Ein monolithisches Rührreibschweißwerkzeug, zum Rührreibschweißen von Werkstoffen, bestehend aus einem Formkörper (1.0), wobei der Formkörper (1.0) aufweist:
- eine Rotationsachse (2.0),
- eine Schulter (1.1), die orthogonal zu der Rotationsachse (2.0) angeordnet ist,
- eine Schultermantelfläche (1.2), welche zwischen Schulter (1.1) und Werkzeugschaft (1.4) angeordnet ist,
- einen Rührstift (1.3), der terminal auf der Rotationsachse (2.0) an der Schulter (1.1) angeordnet ist,
- einen Werkzeugschaft (1.4) mit zentral verlaufender Rotationsachse (2.0),
**gekennzeichnet dadurch, dass**
der Formkörper (1.1) einteilig ausgestaltet ist und aus einem Material besteht ausgewählt aus der Liste bestehend aus Hartmetall, Cermet oder Keramik,
wobei der Formkörper einen integrierten Kühlkanal (3.0) aufweist,
wobei der Kühlkanal mit einer Austrittsöffnung (4.0) verbunden ist,
wobei die Austrittsöffnung an der Peripherie des Formkörpers angeordnet ist.

2. Rührreibschweißwerkzeug gemäß Anspruch 1, wobei der integrierte Kühlkanal (3.0) linear ausgestaltet ist.

3. Rührreibschweißwerkzeug gemäß einem der Ansprüche 1 oder 2, wobei der integrierte Kühlkanal (3.0) verdrallt ausgestaltet ist.

4. Rührreibschweißwerkzeug gemäß einem der Ansprüche 1 bis 3, wobei die Austrittsöffnung (4.0) über einen Austrittskanal (5.0) mit dem integrierten Kühlkanal (3.0) verbunden ist.

5. Rührreibschweißwerkzeug gemäß einem der Ansprüche 1 bis 4, wobei der Austrittskanal (5.0) einen Winkel (7.0) von 10° bis 90° gegenüber der Rotationsachse (2.0) aufweist.

6. Rührreibschweißwerkzeug gemäß einem der Ansprüche 1 bis 5, wobei der integrierte Kühlkanal (3.0) zwei bis zehn verschiedene Austrittsöffnungen (4.0) aufweist.

7. Rührreibschweißwerkzeug gemäß einem der Ansprüche 1 bis 6, wobei der Kühlkanal zum Transport eines Kühlmittels eingerichtet ist, wobei das Kühlmittel ausgewählt wird aus der Liste bestehend aus Wasser, wasserbasierte Emulsionen, Reinöle, Luft, Stickstoff, oder Argon.

8. Rührreibschweißwerkzeug gemäß einem der Ansprüche 1 bis 7, wobei das Material eine Härte von 1000 bis 2500 HV aufweist.

9. Rührreibschweißwerkzeug gemäß einem der Ansprüche 1 bis 8, wobei das Material ein Hartmetall ist, wobei das Hartmetall aus einer Zusammensetzung mit einen Massenanteil von 60 bis 97% α-Phase, bevorzugt Wolframcarbid (WC), 3 bis 20% β-Phase, bevorzugt ausgewählt aus der Liste bestehend aus Co, Ni oder einer Mischung daraus, sowie 0 bis 35% γ-Phase, bevorzugt ausgewählt aus der Liste bestehend aus TiC, (Ta,Nb)C, ZrC, VC oder einer Mischung daraus, besteht.

10. Rührreibschweißwerkzeug gemäß einem der Ansprüche 1 bis 9, wobei die Keramik ausgewählt ist aus der Liste bestehend aus Aluminiumoxid (CA), Mischkeramik (CM), Whiskerverstärkte Keramik (CR), Siliciumcarbid (SC), SiAlON oder Siliciumnitrid-Schneidkeramik (CN).

11. Rührreibschweißwerkzeug gemäß einem der Ansprüche 1 bis 10, wobei zumindest das Material der Schulter und/oder des Rührstiftes eine Beschichtung aufweist, wobei die Beschichtung eine PVD- oder CVD-Beschichtung ist, wobei die Beschichtung vorzugsweise aus einem Beschichtungsmaterial besteht das ausgewählt wird aus der Liste bestehend aus Chemical Vapor Deposition-Diamant (CVD-Diamant), Titanaluminiumnitrid (TiAIN), Titannitrid (TiN), Aluminiumtitannitrid (AlTiN), Titancarbidnitrid (TiCN), Zinknitrid (ZnN), Zirkonnitrid (ZrN), DLC (Diamond-Like Carbon), PKD (polykristalliner Diamant), oder PCBN (polykristallines kubisches Bornitrid).

12. Rührreibschweißwerkzeug gemäß einem der Ansprüche 1 bis 11, wobei der Werkzeugschaft ein Haltemittel (1.5) für die Werkzeugaufnahme aufweist, wobei das Haltemittel (1.5) bevorzugt ausgewählt wird aus der Liste bestehend aus Gewinde, Weldon-Aufnahme, Flächenspannfutter, Nut, Kerbe, Ausnehmung oder Schiene.

13. Methode zur Herstellung des Rührreibschweißwerkzeugs nach einem der Ansprüche 1 bis 12, umfassend die Schritte
a) Bereitstellung der Ausgangsstoffe in Pulverform mit definierten Eigenschaften, insbesondere Partikelgrößen,
b) Homogenisierung der Ausgangsstoffe,
c) Kaltformung des Formkörpers und anschließendes Sintern, oder
d) Additive Herstellung des Formkörpers,
e) Nachbearbeitung des Formkörpers, insbesondere schleifen.

14. Rührreibschweißwerkzeughaltersystem, aufweisend ein Rührreibschweißwerkzeug nach Anspruch 12, mittels des Haltemittels (1.5) wirkverbunden angeordnet in einem Werkzeughalter (6.0) mit integrierter Kühlmittelzufuhr (6.1).

15. Rührreibschweißsystem, aufweisend ein Rührreibschweißwerkzeug nach einem der Ansprüche 1 bis 12 oder ein Rührreibschweißwerkzeughaltersystem nach Anspruch 14, wirkverbunden angeordnet an einer Werkzeugspindel, wobei die Werkzeugspindel eine Kühlmittelzufuhr aufweist.
